# EUROPÄISCHE PATENTANMELDUNG

(11) **EP 1 335 216 A2**
(43) Veröffentlichungstag der Anmeldung: **13.08.2003**
(21) Anmeldenummer: 03002492.1
(22) Anmeldetag: 05.02.2003
(51) Int. Cl.: G02B 5/28

(54) **Farbkamera mit optischem Filter**

(30) Priorität: 08.02.2002 DE 10205250
(71) Anmelder: plettac AG, 58829 Plettenberg (DE)
(72) Erfinder: Leonhardt, Rainer, 91154 Roth (DE)
(74) Vertreter: Pröll, Jürgen, Dipl.-Ing. (FH)

(57) **Zusammenfassung**

Die Erfindung betrifft eine elektronische Farbüberwachungskamera zur Verwendung bei Tageslicht und künstlicher Infrarotbeleuchtung und ein IR-Bandsperrenfilter. Die Farbüberwachungskamera ist mit einer optischen Einheit ausgestattet, welche zwischen einem Objektiv und einem CCD-Sensor angeordnet ist. Die optische Einheit besteht aus einem optischen Tiefpass und einem Infrarotlichtfilter.

## Beschreibung

Die Erfindung betrifft eine Farbkamera der Überwachungstechnik sowie einen optischen Tiefpassfilter zum Einsatz in einer Farbkamera der Überwachungstechnik.

Farbüberwachungskameras werden heutzutage zur Überwachung bei Tageslicht sowie bei künstlicher Beleuchtung eingesetzt. Sollte sichtbares Licht stören (Blendwirkung) wird die Szene mit künstlichem Infrarotlicht beleuchtet. Dies ermöglicht es, ohne für einen Menschen sichtbar, die Umgebung für Überwachungszwecke zu erleuchten und ein Umgebungsfeld mit einer Kamera zu überwachen, ohne dass sie für das menschliche Auge wahmehmbar ist.

Bei Verwendung von Infrarotlicht muss die Farbüberwachungskamera auf Schwarz-Weiß umgeschaltet werden, da eine Farberkennung über die Farbüberwachungskamera mit Infrarotlicht (monochrome Beleuchtung) nicht möglich ist.

Da Farbüberwachungskamera üblicherweise mit einem IR-Cut-Filter ausgerüstet sind muss anderweitig ermöglicht werden, dass Reflexionen von Objekten, auf welche die Lichtwellen der künstlichen Infrarotbeleuchtung den in der Überwachungskamera angeordneten CCD-Sensor erreichen.

Es sind derzeit zwei Lösungen bekannt:

### 1. Lösung: Auswechselbares Infrarot-Cut-Filter

Bei diese bekannten Anwendung ist die Farbüberwachungskamera mit einem Infrarot-Filter, einem sogenannten IR-Cut-Filter, ausgestattet. Der IR-Cut-Filter wird mechanisch ein- bzw. ausgeschwenkt, d.h. je nach Bedarf in die optische Ebene der Kamera eingebracht oder aus dieser entfernt. In der Farbüberwachungskamera ist eine Filtereinheit, bestehend aus einem optischen Filter in Verbindung mit einem IR-Cut-Filter, angeordnet, wobei der IR-Cut-Filter sämtliche Infrarotanteile oberhalb einer vorgegebenen Wellenlänge, insbesondere oberhalb von 650 nm, aus dem in die Farbüberwachungskamera einfallenden Licht ausfiltert. Der IR-Cut-Filter ist in der Filtereinheit angeordnet, welche häufig zusätzlich einen optischen Tiefpass aufweist.

Um die Farbüberwachungskamera bei Tageslicht einsetzen zu können und Falschfarbendarstellungen oder eine Übersteuerung des Sensors der Farbüberwachungskamera, des sogenannten CCD-Sensors, zu vermeiden, wird bei Tageslicht die Farbüberwachungskamera mit dem Filter, welcher einen IR-Cut-Filter aufweist, betrieben. Auf diese Weise werden Farbverfälschungen unterdrückt, welche durch den Infrarotanteil des Tageslichtes beim Auftreffen auf den CCD-Sensor der Farbüberwachungskamera entstehen würden, da der für die Szenenerfassung störende IR-Anteil des Tageslichtes ausgefiltert wird.
Allerdings kann die Farbüberwachungskamera mit einem derartigen optischen Filter nicht zu Nachtüberwachungszwecken mit Infrarotlicht verwendet werden, da bei dieser Beleuchtung das Licht vom optischen Filter nicht an den CCD-Sensor gelassen, sondern herausgefiltert wird. Daher wird zur Nachtüberwachung der optische Filter getauscht mit einem Filter ohne IR-Cut-Filter.
Um nicht ständig bei Tag- und Nachtwechsel den optische Filter mit der Hand wechseln zu müssen, sind Schwenkvorrichtungen in der Farbüberwachungskamera vorhanden, welche selbsttätig das Wechseln der Filter vornehmen. Hierzu wird der optische Filter der Farbüberwachungskamera aus dem Strahlengang ausgeschwenkt und durch einen anderen optischen Filter, welcher identische mechanische Abmessung aufweist, ersetzt. Die Abmessungen der Filter müssen gleich sein, da anderenfalls dies dazu führen würde, dass bei der Aufnahmeoptik der Kamera diese Unterschiede ausgeglichen werden müssten, oder je nach eingesetztem Filter, sich die Schärfe der erfassten Szene verändern würde. Zwei Filter mit gleichen Abmessungen und der zugehörigen Wechseleinrichtung sind kostenintensiv und erhöhen die Anschaffungskosten der Farbüberwachungskamera.
Im weiteren ist nachteilig, dass durch das Aus- und Einschwenken der optischen Filter selbige beschädigt werden können. Außerdem tritt durch Abrieb häufig eine Verschmutzung der optischen Filter auf, auch Verkratzungen sind möglich. Die Wechselmechanik ist insbesondere beim Betrieb im extremen Temperaturbereich störungsanfällig und wartungsintensiv. Daher sind die optischen Filter und die zugehörigen Wechseleinheiten tumusmäßig zu warten, was ebenfalls hohe Kosten mit sich bringt.

### 2. Lösung (Kamera ohne IR-Cut-Filter)

Es wird eine Farbkamera zur Überwachungszwecken eingesetzt, welche ohne einen Infrarot-Cut-Filter betrieben wird. Dadurch entstehen bei ungünstigen Szenen, wie etwa Grasflächen, Bäume und Sträucher erhebliche Farbverfälschungen bei der Überwachung im Tageslichtbereich. Beim Einsatz von künstlicher Beleuchtung kommt es zu Farbverfälschungen und Amplitudenerhöhungen auf Grund des hohen Infrarotlichtanteils. Bei künstlichen Szenen, wie Häusern und Strassen treten Farbverfälschungen bei Tageslicht nur in geringem Masse auf. Wie bereits beschrieben, treten diese jedoch insbesondere bei natürlichen Gegenständen auf. Dies führt soweit, dass das von der Farbkamera aufgenommene Bild nicht mehr zur Farbbeurteilung verwendet werden kann. Mit jeder Art künstlicher Beleuchtung erhöht sich, in Abhängigkeit von dessen Infrarotanteil, das Risiko von Falschfarben und Amplitudenüberhöhungen der erfassten Szene beim CCD-Sensor. Bei reiner Infrarot-Beleuchtung treten dagegen keine Probleme auf. Daher ist eine Farbkamera ohne IR-Cut-Filter problematisch beim Einsatz in Überwachungssystemen.

Aufgabe der Erfindung ist es, eine optische Einheit auszugestalten, welche es ermöglicht, in einer Farbüberwachungskamera eingesetzt zu werden und die Farbüberwachungskameras sowohl bei Tageslicht, als auch bei Dunkelheit und künstlicher Infrarotbeleuchtung einsetzbar zu gestalten, unter Vermeidung von Falschfarbenaufnahmen und Amplitudenüberhöhungen im Farbsignal des CCD-Sensors. Im weiteren ist es Aufgabe einen optischen Infrarotlicht-Bandsperrenfilter aufzuzeigen, welcher in der optischen Einheit der Farbüberwachungskamera eingesetzt werden kann und sowohl bei Tageslicht als auch bei künstlicher Beleuchtung Falschfarben und Amplitudenüberhöhungen vermeidet.

Diese Aufgabe wird durch ein optisches Filter mit den Merkmalen des Anspruches 1 und durch eine Farbüberwachungskamera mit den Merkmalen des Anspruches 9 gelöst. Vorteilhafte Weiterbildungen der Erfindung sind in den abhängigen Ansprüchen sowie der weiteren Beschreibung und den zugehörigen Figuren ausgebildet.

Die erfindungsgemäße Farbüberwachungskamera ist mit einem optischen Tiefpassfilter und mit einem speziellen Infrarotlicht-Bandsperrenfilter ausgestattet. Der optische Tiefpassfilter und der spezielle Infrarotlicht-Bandsperrenfilter bilden gemeinsam eine optische Einheit. Diese optische Einheit wurde bisher immer, wie beschrieben, bei der Umschaltung von Nachtüberwachung auf Tageslichtüberwachung und umgekehrt, gewechselt. Die erfindungsgemäße optische Einheit weist jedoch einen Infrarotlicht-Bandsperrenfilter mit speziellen Eigenschaften auf. Der Infrarotlicht-Bandsperrenfilter ist als Bandsperrenfilter ausgestaltet und sperrt Teile des Infrarotlichtes im Bereich ab 650 bis 830 nm. Er filtert das Infrarotlicht in diesem Bereich aus. Die Aussperrung dieser Infrarotlichtwellen führt dazu, dass Farbverfälschungen und Amplitudenerhöhungen bzw. Überhöhungen bei Tageslicht vermieden werden. Auf überraschend einfache Weise ist es somit möglich, durch die erfindungsgemäße optische Einheit mit dem speziellen Infrarotlicht-Bandsperrenfilter, mit oben genannten Eigenschaften, die Farbüberwachungskamera sowohl bei Tageslicht, wie auch bei Dunkelheit und Infrarotbeleuchtung einzusetzen, ohne dass es zu Farbverfälschungen kommt. Daher muss die optische Einheit nicht gewechselt werden. Es werden Verschmutzungen der Kamera durch das ständige Wechseln der optischen Einheit vermieden, auch eine Beschädigung der optischen Einheit durch das Wechseln wird umgangen. Das Gehäuse der Farbüberwachungskamera kann kompakt gestaltet werden und es werden Umgebungseinflüsse vermieden.

Die Erfindung wird im weiteren anhand von Figuren beschrieben.

Es zeigt:
- FIG 1: einen schematischen Aufbau einer Farbüberwachungskamera;
- FIG 2: einen schematischen Aufbau der erfindungsgemäßen optischen Einheit, bestehend aus einem optischen Tiefpass und dem erfindungsgemäßen Infrarotlicht-Bandsperrenfilter;
- FIG 3: eine Filterkurve des erfindungsgemäßen Infrarotlicht-Bandsperrenfilters.

Die Farbüberwachungskamera A besteht im wesentlichen aus einem Gehäuse 1, einem Objektiv 2, einer optischen Einheit 3, einem CCD-Sensor 4 und einer Verarbeitungselektronik 5. Auf die weiteren Bestandteile der Farbüberwachungskamera A, welche nicht erfindungswesentlich sind, wird im Weiteren nicht eingegangen. An das Objektiv 2 fügt sich die optische Einheit 3 an. Diese optische Einheit 3 ist vor dem CCD-Sensor 4 der Farbüberwachungskamera A angeordnet. Diese sorgt dafür, dass auf den CCD-Sensor 4 nur Wellenlängen definierter und vorgegebener Wellenlängenbereiche treffen. Die Verarbeitungselektronik 5 nimmt die vom CCD-Sensor 4 abgegebenen Werte und ermittelten Daten auf, verarbeitet diese und leitet sie der Weiterverarbeitungselektronik der Farbüberwachungskamera A zu.

Das Objektiv 2 mit einer zugehörigen Linse dienst dazu, um die Farbüberwachungskamera A auf diverse Objekte einer Überwachungsszene auszurichten.

Die optische Einheit 3 besteht aus einem erfindungsgemäßen Infrarotlicht-Bandsperrenfilter und einem optischen Tiefpass.

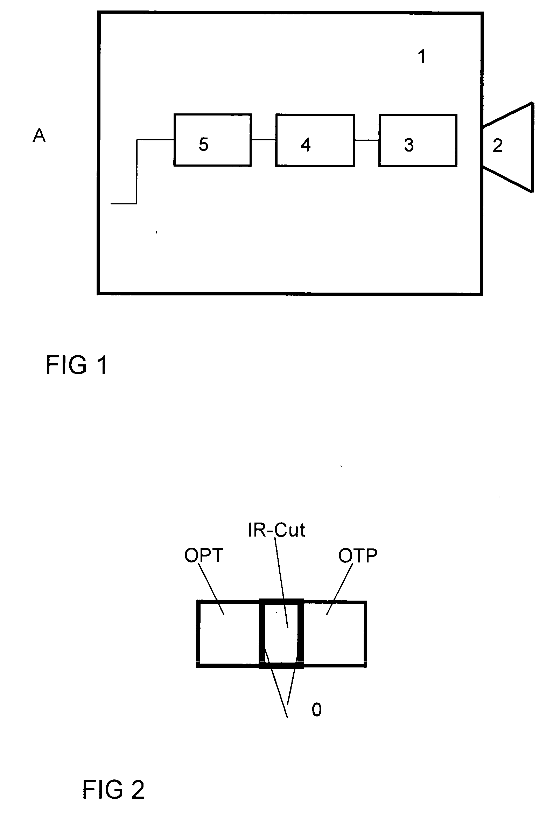

Die optische Einheit 3 ist in Figur 2 beispielhaft aufgezeigt. Sie besteht aus einem optischen Tiefpass OTP und dem erfindungsgemäßen Infrarotlicht-Bandsperrenfilter IR-Cut. Der optische Tiefpass OTP umschließt den erfindungsgemäßen Infrarotlicht-Bandsperrenfilter IR-Cut beidseitig. Die Oberflächen O, an welchen der optische Tiefpass OPT und der Infrarotlicht-Bandsperrenfilter IR-Cut aneinander grenzen, sind derart oberflächenbehandelt, dass kaum zusätzliche Brechungen der Lichtwellen beim Durchwandern der optischen Einheit 3 erfolgen. Eine Brechung der Lichtwellen beim Übergang des optischen Tiefpasses OTP an der Oberflächen O zum Infrarotlicht-Bandsperrenfilter IR-Cut sind minimiert.

Die optische Einheit 3 ist vor dem CCD-Sensor 4 angeordnet und ist mit dem Objektiv 2 und dem CCD-Sensor 4 verbunden. Das Gehäuse 1 der Farbüberwachungskamera A ist derart gestaltet, dass Staub oder sonstige Verschmutzungen oder Umgebungseinflüsse wie Feuchtigkeit nicht zwischen die Einheiten 4, 3, 2 eindringen können.

Der optische Tiefpass OTP dient dazu, optische Interferenzen zu unterdrücken. Der optische Tiefpass OTP ist sowohl optisch, als auch in seinen mechanischen Abmessungen auf das Infrarotlicht-Bandsperrenfilter IR-Cut abgestimmt.

In einer weiteren vorteilhaften Ausgestaltung der Erfindung ist der optische Tiefpass OTP und der Infrarotlicht-Bandsperrenfilter IR-Cut in einem einzigen Filter zusammengefasst. Beide Funktionen (optischer Tiefpass und Infrarotlicht-Bandsperrenfilter) sind als ein optisches Filter und/oder in einem optischen Filter zusammengefasst bzw. integriert. Auf diese weise ist es möglich das optische Filter sehr kompakt zu gestalten. Die Übergänge zwischen dem optischen Tiefpass OTP und dem Infrarotlicht-Bandsperrenfilter IR-Cut entfallen, eine Brechung des eintreffenden Lichtes an den Übergängen wird vermieden.

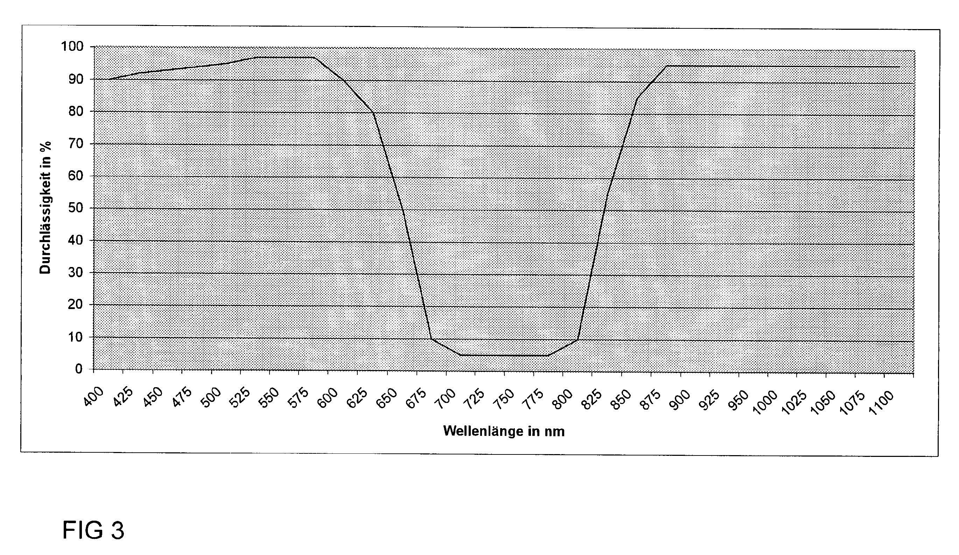

Der Infrarotlicht-Bandsperrenfilter IR-Cut, welcher in Figur 3 näher in seinen optischen Eigenschaften beschrieben ist, ist als Bandsperrenfilter ausgestaltet. Der Infrarotlicht-Bandsperrenfilter IR-Cut hat einen Durchlässigkeitsbereich von mehr als 80% im Bereich außerhalb von 620 nm bis 850 nm. Im Bereich 625 nm bis 700 nm fällt die Durchlasskurve stetig auf 5% ab und im Bereich 700 nm bis 800 nm sperrt der Infrarotlicht-Bandsperrenfilter IR-Cut diese Wellenlängen fasst vollkommen. Zwischen 780 und 850 nm steigt die Durchlasskurve von 5% bis >80% stetig an.

Oberhalb von 850 nm ist der Infrarotlicht-Bandsperrenfilter IR-Cut derart ausgestaltet, dass er für diese Wellenlängen so gut wie komplett durchlässig ist. Es hat sich insbesondere ergeben, dass Wellenlängen im Bereich von 620 bis 830 nm von besonderer Bedeutung sind und diese ausgeblendet werden müssen, um Verfälschungen bei der Farbaufnahme zu umgehen.

Insbesondere wurde festgestellt, dass Farbverfälschungen bei Tageslicht hauptsächlich von Licht der Wellenlängen 630 nm bis 820 nm hervorgerufen werden. Diese Wellenlängen werden durch das erfindungsgemäße Infrarotlicht-Bandsperrenfilter IR-Cut ausgefiltert und erreichen somit den CCD-Sensor 4 der Farbüberwachungskamera A nicht, Farbverfälschungen und Amplitudenerhöhungen werden bei Tageslicht vermieden.

Da der erfindungsgemäße Infrarotlicht-Bandsperrenfilter IR-Cut Lichtwellen im Bereich größer 850 nm nicht sperrt, sondern diese durchlässt, ist es möglich, mit handelsüblichen Infrarotscheinwerfern bei Dunkelheit zu arbeiten, welche bekanntermaßen im Lichtwellenbereich von 850 nm bis 950 nm arbeiten. Bei Betrieb mit Infrarotbeleuchtung wird die Kamera auf Schwarz/Weiß geschaltet.

### Bezugszeichenliste

- A: Farbüberwachungskamera

- 1: Gehäuse
- 2: Objektiv
- 3: optische Einheit
- 4: CCD-Sensor
- 5: Verarbeitungselektronik

- IR-Cut: Optische Bandsperrenfilter
- OTP: optischer Tiefpass

## Patentansprüche

1. Optischer Bandsperrenfilter (IR-Cut),
**dadurch gekennzeichnet, dass**
der optische Bandsperrenfilter (IR-CUT) Infrarotlicht im Bereich 630 nm bis 830 nm aus dem auf den optische Bandsperrenfilter (IR-CUT) auftreffenden Licht herausfiltert.

2. Optischer Bandsperrenfilter (IR-Cut) nach Anspruch 1,
**dadurch gekennzeichnet, dass**
der Dämpfungsverlauf des optischen Bandsperrenfilters zwischen 620 nm und 690 nm >90% und <10% beträgt.

3. Optischer Bandsperrenfilter (IR-Cut) nach Anspruch 1 oder 2,
**dadurch gekennzeichnet, dass**
der optische Bandsperrenfilter (IR-Cut) Infrarotlicht im Bereich 700 nm bis 800 nm zu mehr als 90% aus dem eintreffenden Licht herausfiltert.

4. Optischer Bandsperrenfilter (IR-Cut) nach einem oder mehreren der Ansprüche 1 bis 3,
**dadurch gekennzeichnet, dass**
der optische Bandsperrenfilter (IR-Cut) mit einem optischen Tiefpass (OTP) einen gemeinsamen Glaskörper bildet.

5. Optische Bandsperrenfilter (IR-Cut) nach einem oder mehreren der Ansprüche 1 bis 4,
**dadurch gekennzeichnet, dass**
der optische Tiefpass (OTP) und der optische Bandsperrenfilter (IR-Cut) an den aneinandergrenzenden Grenzflächen (O) derart vergütet und oberflächenbehandelt sind, dass kaum Brechungen oder Steuerungen der Lichtwellen beim Übergang zwischen beiden Filtern entstehen.

6. Optischer Bandsperrenfilter (IR-Cut) nach einem oder mehreren der Ansprüche 1 bis 5,
**dadurch gekennzeichnet, dass**
der optische Bandsperrenfilter (IR-Cut) aus speziellem Glas gefertigt ist.

7. Optischer Bandsperrenfilter (IR-Cut) nach einem oder mehreren der Ansprüche 1 bis 6,
**dadurch gekennzeichnet, dass**
der optische Bandsperrenfilter (IR-Cut) ein Bandsperrenfilter ist, der Infrarotlichtwellen aus dem Tageslicht herausfiltert, um Farbverfälschungen oder Amplitudenerhöhungen bei einem nachgeschalteten CCD-Sensor (5) bei zu vermeiden.

8. Optischer Bandsperrenfilter (IR-Cut) nach einem oder mehreren der Ansprüche 1 bis 7,
**dadurch gekennzeichnet, dass**
der optische Bandsperrenfilter (IR-Cut) Lichtwellen oberhalb der Wellenlängen von 850 nm, insbesondere von künstlich erzeugtem Infrarotlicht, nicht beeinflusst.

9. Elektronische Farbüberwachungskamera (A) zur Verwendung bei Tageslicht und künstlicher Infrarotbeleuchtung mit einer optischen Einheit (3), welche zwischen einem Objektiv (2) und einem CCD-Sensor (4) angeordnet ist und die optische Einheit (3) aus einem optischen Tiefpass (OTP) und einem Infrarotlichtfilter besteht,
**dadurch gekennzeichnet, dass**
das Infrarotlichtfilter ein optische Bandsperrenfilter (IR-Cut) gemäss einem der vorhergehenden Ansprüche ist.
